# EUROPÄISCHE PATENTANMELDUNG

(11) **EP 1 858 206 A1**
(43) Veröffentlichungstag der Anmeldung: **21.11.2007**
(21) Anmeldenummer: 07004844.2
(22) Anmeldetag: 09.03.2007
(51) Int. Cl.: H04L 12/46, H04L 12/12, H04L 12/24, G06F 13/40, B60R 16/023

(54) **Verfahren und Vorrichtung zum Steuern von Netzwerksegmenten eines Netzwerks in einem Kraftfahrzeug**

(30) Priorität: 18.05.2006 DE 102006023274
(71) Anmelder: Dr.Ing. h.c. F. Porsche Aktiengesellschaft, 70435 Stuttgart (DE)
(72) Erfinder: Luz, Dietmar, 75365 Calw (DE); Roppel, Ruediger, 36103 Flieden (DE)

(57) **Zusammenfassung**

Die Erfindung betrifft ein Verfahren und eine Vorrichtung (6) zum Steuern von Netzwerksegmenten (3, 4, 5) eines Netzwerks (2) in einem Kraftfahrzeug (1). Die Netzwerksegmente (3, 4, 5) werden in Abhängigkeit von vorgegebenen Bedingungen aktiviert oder deaktiviert. Zudem werden die Bedingungen verändert.

## Beschreibung

Die vorliegende Erfindung betrifft ein Verfahren und eine Vorrichtung zum Steuern von Netzwerksegmenten eines Netzwerks in einem Kraftfahrzeug.

In einem Kraftfahrzeug ist üblicherweise ein Netzwerk eingerichtet, dass mehrere Netzwerksegmente aufweist. Das Netzwerk ist insbesondere ein Datenbussystem mit mehreren Datenbussen oder Datenbussegmenten, die über ein oder mehrere sogenannte Gateways miteinander verbunden sind. Ein solches Gateway stellt ein Steuergerät dar, das als Schnittstelle zwischen mehreren Datenbussen oder Datenbussegmenten dient. Die Datenbusse können in verschiedenen Teilen des Kraftfahrzeugs installiert sein. Ein solcher Datenbus ist beispielsweise in einem Motorraum und ein anderer in einem Innenraum des Kraftfahrzeugs angeordnet. Die Datenbusse können weitgehend unabhängig voneinander betrieben werden. Sie tauschen allerdings Daten oder Signale untereinander aus. Mittels des Gateways werden die Daten und Signale zwischen den einzelnen Datenbussen umgesetzt und weitergeleitet. Das Gateway koordiniert und steuert die Kommunikation der Datenbusse untereinander. Als Netzwerk kann beispielsweise ein sogenanntes Controller Area Network, CAN, eingesetzt werden.

An die verschiedenen Datenbusse oder Datenbussegmente sind Komponenten des Kraftfahrzeugs angeschlossen, die für ein Ausführen von verschiedenen Funktionen benötigt werden. Solche Komponenten können beispielsweise ein Autoradio, ein Generator, Aktoren, Sensoren, Steuergeräte, etc. sein. Für eine auszuführende Funktion kann es erforderlich sein, dass Komponenten, die an verschiedene Datenbusse angeschlossen sind, miteinander kommunizieren. Abhängig davon, ob an die einzelnen Datenbusse oder Datenbussegmente angeschlossene Komponenten zum Ausführen einer bestimmten Funktion benötigt werden oder nicht, können die einzelnen Datenbusse oder Datenbussegmente mittels des Gateways aktiviert oder deaktiviert werden. Dies wird auch als Wecken bzw. Schlafenlegen oder als Herauf- bzw. Herunterfahren der Datenbusse oder Datenbussegmente bezeichnet. Zum Aktivieren der Datenbusse, beispielsweise beim Einschalten einer Zündung des Kraftfahrzeugs, sind in dem Gateway feste, einmalig vorgegebene Bedingungen oder Regeln vorhanden. Mit den Bedingungen sind Zusammenhänge beschrieben, wie und wann die Datenbusse aktiviert werden. Gleiches gilt für das Deaktivieren der Datenbusse.

Es ist die Aufgabe der vorliegenden Erfindung, ein effizientes Aktivieren und Deaktivieren von Netzwerksegmenten eines Netzwerks in einem Kraftfahrzeug zu ermöglichen.

Diese Aufgabe wird gemäß der technischen Lehre des Anspruchs 1 oder des Anspruchs 5 gelöst. Erfindungsgemäß werden die Netzwerksegmente in Abhängigkeit von vorgegebenen Bedingungen aktiviert oder deaktiviert. Die Bedingungen können dabei verändert werden. Vorrichtungsseitig ist ein Speicher zum Abspeichern der vorgegebenen Bedingungen vorhanden. Die Vorrichtung ist dabei so ausgestaltet, dass sie das Aktivieren oder Deaktivieren der Netzwerksegmente in Abhängigkeit von den vorgegebenen Bedingungen steuert und die Bedingungen veränderbar sind. Die Vorrichtung ist daher so ausgestaltet, dass sie das Verändern der Bedingungen zulässt und ermöglicht.

Aufgrund der vorliegenden Erfindung können die vorgegebenen Bedingungen vorteilhafterweise zur Laufzeit der Vorrichtung insbesondere dynamisch angepasst oder geändert werden. Die Bedingungen, und damit die Funktionsweise des Verfahrens oder der Vorrichtung, können somit auf besonders einfache Weise variabel optimiert werden. Die Bedingungen geben vor allem Abhängigkeiten zwischen den Netzwerksegmenten bei deren Aktivieren oder Deaktivieren vor. Dies betrifft insbesondere eine Abfolge oder Reihenfolge, in der die einzelnen Netzwerksegmente aktiviert oder deaktiviert werden. Das Netzwerk ist insbesondere ein Datenbussystem und die Netzwerksegmente sind Datenbusse oder Datenbussegmente des Datenbussystems. Dadurch lässt sich die Erfindung auf einfache Weise effizient auf in Kraftfahrzeugen verwendete Netzwerke anwenden.

In einer vorteilhaften Ausgestaltung der Erfindung werden die vorgegebenen Bedingungen in Abhängigkeit von Parametern verändert. Dadurch können die Bedingungen auf besonders einfache Weise verändert werden. Die Parameter können sich beispielsweise aus einem bestimmten internen Zustand des Kraftfahrzeugs ergeben oder von extern vorgegeben werden. Ausgehend von den Parametern können dann die Bedingungen festgelegt werden.

Vorzugsweise sind die vorgegebenen Bedingungen in einer Liste enthalten und der Inhalt dieser Liste wird verändert. Dies gewährleistet vorteilhafterweise ein besonders einfaches Verändern der Bedingungen. Einfachheitshalber ist es beispielsweise möglich, die vorhandene Liste mit den vorgegebenen Bedingungen gegen eine neue Liste mit vorgegebenen Bedingungen auszutauschen.

In einer weiteren vorteilhaften Ausgestaltung werden die vorgegebenen Bedingungen mittels einer Steuereinrichtung verändert. Die Steuereinrichtung kann insbesondere eine externe Steuereinrichtung sein, die von außerhalb des Kraftfahrzeugs mit dem Netzwerk verbunden wird. Dies kann insbesondere mittels einer Schnittstelle zu der Steuereinrichtung realisiert sein, über die Vorgaben zum Verändern der Bedingungen oder veränderte Bedingungen selbst empfangen werden.

Weitere Vorteile und vorteilhafte Ausgestaltungen der Erfindung ergeben sich aus der folgenden Beschreibung von bevorzugten Beispielen und Ausführungsbeispielen unter Bezugnahme auf die beigefügten Zeichnungen. Es zeigen:
- Fig. 1: eine schematische Darstellung eines Netzwerks eines Kraftfahrzeugs mit einer erfindungsgemäßen Vorrichtung zum Steuern von Netzwerksegmenten,
- Fig. 2: ein Zustandsdiagramm mit einem Ablauf zum Aktivieren und Deaktivieren von Netzwerksegmenten in Abhängigkeit von vorgegebenen Bedingungen und
- Fig. 3: ein weiteres Zustandsdiagramm mit einem weiteren Ablauf zum Aktivieren und Deaktivieren von Netzwerksegmenten.

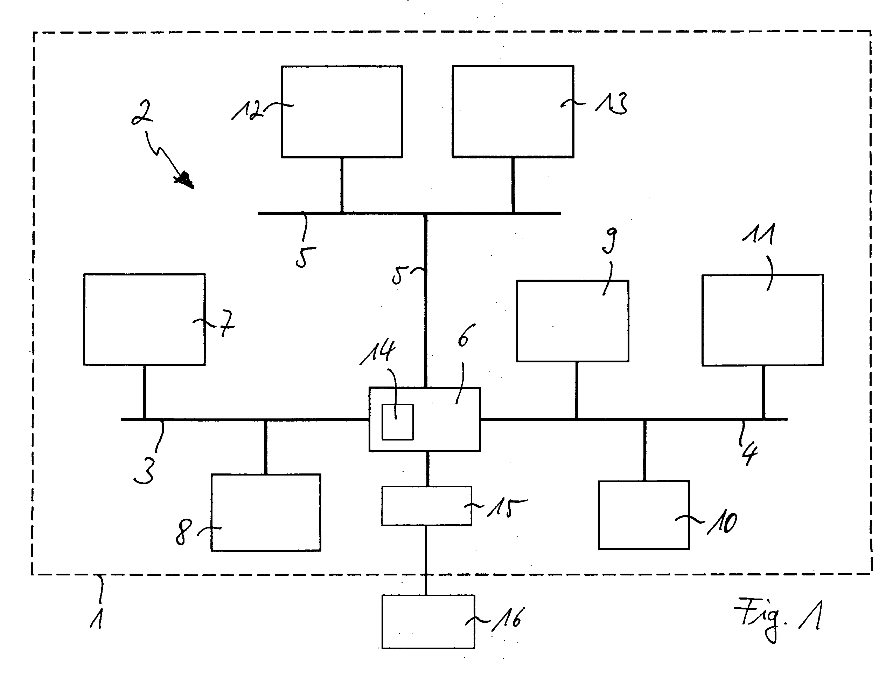

Fig. 1 zeigt ein Netzwerk in einem Kraftfahrzeug 1. Das Netzwerk enthält mehrere Netzwerksegmente. Das Netzwerk ist hier ein Datenbussystem 2 und die Netzwerksegmente sind Datenbusse, die auch als Datenbussegmente bezeichnet werden können. Stellvertretend für eine Vielzahl von Datenbussen sind in der Fig. 1 Datenbusse 3, 4 und 5 dargestellt. Die Datenbusse 3, 4, 5 sind mittels einer erfindungsgemäßen Steuervorrichtung zum Steuern von Netzwerksegmenten miteinander verbunden. Die Steuervorrichtung ist ein sogenanntes Gateway 6. Das Gateway 6 dient als Schnittstelle zwischen den Datenbussen 3, 4, 5. Die Datenbusse 3, 4, 5 können in verschiedenen Teilen des Kraftfahrzeugs installiert sein. Über die Datenbusse 3, 4, 5 werden Daten und Signale übertragen. Mittels des Gateways 6 werden Daten und Signale zwischen den einzelnen Datenbussen 3, 4, 5 umgesetzt und weitergeleitet. Das Gateway 6 koordiniert und steuert die Kommunikation zwischen den Datenbussen 3, 4, 5. Die Datenbusse 3, 4, 5 sind hier sogenannte CAN-Busse. Es ist aber auch möglich, in dem Datenbussystem 2 zusätzlich oder alternativ zu den CAN-Bussen 3, 4, 5 andere Bustypen, wie z. B. MOST-oder FlexRay-Datenbustypen, einzusetzen.

An die Datenbusse 3, 4, 5 sind verschiedene Komponenten oder Teilnehmer des Kraftfahrzeugs 1 angeschlossen. Die Komponenten sind Steuergeräte, Aktoren, Sensoren oder andere Elemente, die bestimmte vorgegebene Funktionen zum Betrieb des Kraftfahrzeugs 1 ausführen. Solche Komponenten können beispielsweise ein Steuergerät für einen Generator, ein Steuergerät für einen Motorlüfter, ein Türschlosssensor, ein Radio, usw. sein. Im vorliegenden Ausführungsbeispiel nach Fig. 1 sind an den Datenbus 3 Komponenten 7 und 8, an den Datenbus 4 Komponenten 9, 10 und 11 und an den Datenbus 5 Komponenten 12 und 13 angeschlossen.

Zum Transportieren von Daten und Signalen zwischen den einzelnen Komponenten 7-13 über die Datenbusse 3, 4, 5 und zum Austausch von Daten und Signalen zwischen den Datenbussen 3, 4, 5 sind die Datenbusse 3, 4, 5 aktiviert. Vor allem dann, wenn alle, an einen der Datenbusse 3, 4, 5 angeschlossenen Komponenten nicht benötigt werden, kann der jeweilige Datenbus 3, 4, 5 deaktiviert werden. Dadurch wird vorteilhafterweise der Stromverbrauch im Kraftfahrzeug 1 optimiert. Dies kann beispielsweise nach Ausschalten einer Zündung des Kraftfahrzeugs 1 der Fall sein. Nach einem Deaktivieren eines der Datenbusse 3, 4, 5 muss der jeweilige Datenbus 3, 4, 5 zum Übertragen von Daten und Signalen erneut aktiviert werden, damit die an ihn angeschlossenen Komponenten 7-13 Daten und Signale empfangen und senden können. Das Aktivieren und Deaktivieren der Datenbusse 3, 4, 5 erfolgt mittels des Gateways 6. Das Aktivieren und Deaktivieren wird auch als Wecken bzw. Schlafenlegen oder als Herauf- bzw. Herunterfahren der Datenbusse 3, 4, 5 bezeichnet. Das Aktivieren der Datenbusse 3, 4, 5 erfolgt beispielsweise beim Einschalten der Zündung des Kraftfahrzeugs 1. Die Datenbusse 3, 4, 5 sind hier somit als weckfähige Datenbusse ausgestaltet. Zum Aktivieren und Deaktivieren sind in dem Gateway 6 Bedingungen vorgegeben. Das Gateway 6 enthält dazu einen Speicher 14, in dem die Bedingungen abgespeichert sind. Mit den Bedingungen sind Zusammenhänge beschrieben, wie und wann, insbesondere in welcher Reihenfolge, die Datenbusse 3, 4, 5 aktiviert und deaktiviert werden.

Die Bedingungen sind in dem Speicher 14 einfachheitshalber in Form von einer Liste abgespeichert. In der Tabelle 1 ist beispielhaft eine solche Liste dargestellt. Die Liste bezeichnet ein einer Spalte 1 verschiedene Zustände 0-7. Den Zuständen sind in Spalten 2, 3 und 4 Angaben zugeordnet, ob die Datenbusse 3, 4, 5 in den Zuständen 0-7 aktiv oder deaktiv sind. Die Zustände 0-7 decken alle Kombinationsmöglichkeiten von aktiven und deaktiven Zuständen der Datenbusse 3, 4, 5 ab. So sind in dem Zustand 0 beispielsweise die Datenbusse 3, 4, 5 deaktiv. In dem Zustand 7 sind die Datenbusse 3, 4, 5 aktiv. Die Zustände 1-6 decken die dazwischen liegenden
Kombinationsmöglichkeiten ab. In einer Spalte 5 sind die Zustände 0, 3, 4, 6 und 7 aufgeführt und den Zuständen 0-7 aus Spalte 1 zugeordnet. Die Zustände in Spalte 5 bezeichnen Folgezustände, die auf den jeweils zugeordneten Zustand in Spalte 1 folgen. Die Zustände in Spalte 1 stellen daher Ausgangszustände dar. Die Folgezustände in Spalte 5 folgen insbesondere nach einem Eintreten eines innerhalb des Kraftfahrzeugs 1 auftretenden, internen Ereignisses auf die Ausgangszustände in Spalte 1. Das Eintreten der internen Ereignisse wird dem Gateway 6 über das Datenbussystem 2 übermittelt, so dass das Gateway 6 ausgehend von einem vorhandenen Zustand gemäß Spalte 1 den gemäß Spalte 5 vorgegebenen Folgezustand einstellt. Zusätzlich zu den internen Ereignissen können extern veranlasste Ereignisse auftreten, die einen Zustandswechsel der Datenbusse 3, 4, 5 erforderlich machen. Ein solches externes Ereignis kann beispielsweise das Öffnen einer Tür des Kraftfahrzeugs 1 durch eine Person sein. Dieses Öffnen der Tür wird durch den Türschlosssensor detektiert, so dass beispielsweise die Innenraumbeleuchtung eingeschaltet werden kann. Die dazu erforderlichen, zuvor deaktivierten Datenbusse müssen somit aktiviert werden.

**Tabelle 1**

| 1 | 2 | 3 | 4 | 5 |
|---|---|---|---|---|
| Ausgangszustand | Bus 5 | Bus 4 | Bus 3 | Folgezustand |
| Zustand 0 | deaktiv | deaktiv | deaktiv | Zustand 0 |
| Zustand 1 | deaktiv | deaktiv | aktiv | Zustand 0 |
| Zustand 2 | deaktiv | aktiv | deaktiv | Zustand 6 |
| Zustand 3 | deaktiv | aktiv | aktiv | Zustand 1 |
| Zustand 4 | aktiv | deaktiv | deaktiv | Zustand 6 |
| Zustand 5 | aktiv | deaktiv | aktiv | Zustand 7 |
| Zustand 6 | aktiv | aktiv | deaktiv | Zustand 7 |
| Zustand 7 | aktiv | aktiv | aktiv | Zustand 3 |

Zum Optimieren von Funktionsweisen in dem Kraftfahrzeug 1 kann es vorteilhaft oder erforderlich sein, die Zuordnung der Folgezustände in Spalte 5 zu den Ausgangszuständen in Spalte 1 zu verändern. Dies ist erfindungsgemäß auf einfache Weise möglich. Die in dem Speicher 14 abgespeicherte Liste mit Bedingungen zum Aktivieren und Deaktivieren der Datenbusse 3, 4, 5 kann daher verändert werden. Einfachheitshalber wird dazu die Spalte 5 vollständig oder teilweise ausgetauscht oder ihr Inhalt geeignet verändert. Das Gateway 6 ist daher mit einer Schnittstelle 15 des Datenbussystems 2 verbunden. Die Schnittstelle 15 ist eine Schnittstelle zum Anschließen einer externen Steuereinrichtung. In der Fig. 1 ist eine solche Steuereinrichtung dargestellt, die hier ein Testgerät 16 ist. Das Testgerät 16 ist an die Schnittstelle 15 angeschlossen und kann Daten in das Datenbussystem 2, insbesondere zu dem Gateway 6, übertragen. Solche Daten sind hier Parameter für eine Veränderung des Inhalts der Spalte 5 der in dem Speicher 14 abgespeicherten Liste. Die von dem Testgerät 16 gelieferten Parameter werden dem Gateway 6 übermittel, so dass dieses eine entsprechende Veränderung der abgespeicherten Liste mit den Bedingungen zum Aktivieren und Deaktivieren der Datenbusse 3, 4, 5 vornehmen kann. Es ist auch möglich, eine neue Spalte 5 oder eine vollständig neue Liste von dem Testgerät 16 einzuspielen und in dem Speicher 14 abzuspeichern. Das Verändern der Zuordnung der Folgezustände zu den Ausgangszuständen und das Einspielen der Daten von dem Testgerät 16 in das Datenbussystem 2 kann vorteilhafterweise während der Laufzeit oder des Betriebs des Datenbussystems 2 und des Gateways 6 erfolgen. Tabelle 2 zeigt ein Beispiel einer veränderten Liste, in der die Inhalte der Spalte 5 verändert wurden. Gemäß der Tabelle 2 wurden bei folgenden Ausgangszuständen der Spalte 1 die Zuordnungen zu den Folgezuständen der Spalte 5 verändert: Ausgangszustände 1, 3, 4, 6 und 7.

**Tabelle 2**

| 1 | 2 | 3 | 4 | 5 |
|---|---|---|---|---|
| Ausgangszustand | Bus 5 | Bus 4 | Bus 3 | Folgezustand |
| Zustand 0 | deaktiv | deaktiv | deaktiv | Zustand 0 |
| Zustand 1 | deaktiv | deaktiv | aktiv | Zustand 3 |
| Zustand 2 | deaktiv | aktiv | deaktiv | Zustand 6 |
| Zustand 3 | deaktiv | aktiv | aktiv | Zustand 7 |
| Zustand 4 | aktiv | deaktiv | deaktiv | Zustand 0 |
| Zustand 5 | aktiv | deaktiv | aktiv | Zustand 7 |
| Zustand 6 | aktiv | aktiv | deaktiv | Zustand 4 |
| Zustand 7 | aktiv | aktiv | aktiv | Zustand 6 |

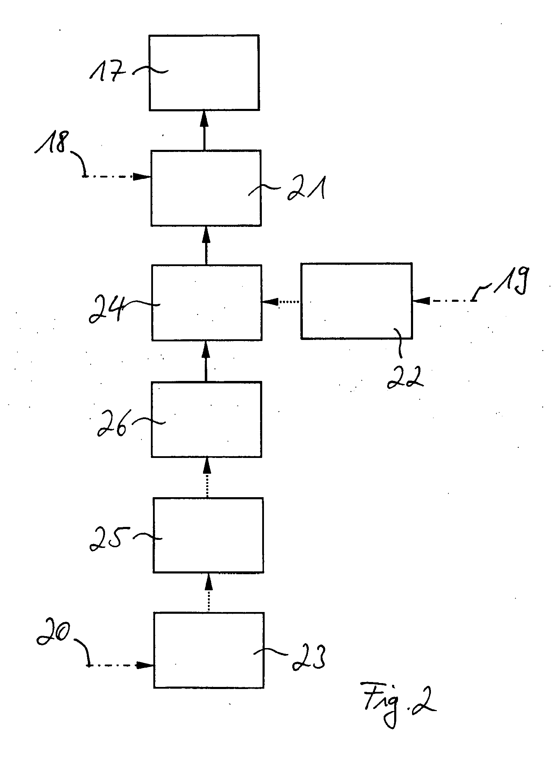

Fig. 2 zeigt beispielhaft ein Zustandsdiagramm mit einem Ablauf zum Aktivieren und Deaktivieren der Datenbusse 3, 4, 5, wie er durch Tabelle 2 vorgegeben ist. In dem Zustand 0, der in der Fig. 2 mit einem Bezugszeichen 17 bezeichnet ist, sind die Datenbusse 3, 4, 5 deaktiviert. Ausgehend von diesem Zustand 0 verbleiben die Datenbusse 3, 4, 5 im Zustand 0, bis ein bestimmtes Ereignis auftritt, dass das Aktivieren wenigstens eines der Datenbusse 3, 4, 5 erforderlich macht. In der Fig. 2 ist beispielhaft das Eintreten von drei solchen Ereignissen 18, 19 und 20 mit strichpunktierten Pfeilen dargestellt. Die Ereignisse 18, 19, 20 sind hier externe Ereignisse. Das Eintreten des Ereignisses 18 führt zu dem Zustand 4, der in der Fig. 2 mit einem Bezugszeichen 21 bezeichnet ist und in dem der Datenbus 5 aktiv und die Datenbusse 3 und 4 deaktiv sind. Das Eintreten des Ereignisses 19 führt zu dem Zustand 2, der mit einem Bezugszeichen 22 bezeichnet ist und in dem die Busse 3 und 5 deaktiv und der Bus 4 aktiv sind. Das Eintreten des Ereignisses 20 führt zu dem Zustand 1, der mit einem Bezugszeichen 23 bezeichnet ist und in dem die Busse 4 und 5 deaktiv und der Bus 3 aktiv sind. Nach dem Eintreten der Ereignisse 18, 19, 20 verlaufen die weiteren Zustandswechsel gemäß den Vorgaben durch die Tabelle 2. Dies bedeutet, dass nach dem Eintreten des Ereignisses 18 und dem Einstellen des Zustands 4 der Zustand 0 eingestellt wird. Damit sind die Datenbusse 3, 4, 5 deaktiviert. Nach dem Eintreten des Ereignisses 19 und dem Einstellen des Zustands 2 wird der Zustand 6, der mit einem Bezugszeichen 24 bezeichnet ist, und ausgehend von dem Zustand 6 der Zustand 4 eingestellt. Ausgehend vom Zustand 4 wird dann, wie zuvor beim Eintreten des Ereignisses 18, der Zustand 0 eingestellt. Nach dem Eintreten des Ereignisses 20 und dem Einstellen des Zustands 1 wird der Zustand 3, der mit einem Bezugszeichen 25 bezeichnet ist, dann der Zustand 7, der mit einem Bezugszeichen 26 bezeichnet ist, und ausgehend vom Zustand 7 der Zustand 6 eingestellt. Vom Zustand 6 werden dann, wie beim Eintreten des Ereignisses 19, der Zustand 4 und dann der Zustand 0 eingestellt. Durch die Ereignisse 18, 19, 20 werden durch das Gateway 6 einzelne der Datenbusse 3, 4, 5 aktiviert. Dieses Aktivieren liegt außerhalb der durch die Tabelle 2 vorgegebenen Zustandswechsel. Erst nach dem Aktivieren der einzelnen Datenbusse 3, 4, 5 erfolgen die weiteren Aktivierungen und Deaktivierungen im Rahmen der durch die Tabelle 2 vorgegebenen Zustandswechsel. In der Fig. 2 sind Zustandswechsel, die mit einem Aktivieren eines der Datenbusse 3, 4, 5 verbunden sind, mittels eines punktierten Pfeils gekennzeichnet, während Zustandswechsel, die mit einem Deaktivieren eines der Datenbusse 3, 4, 5 verbunden sind, mittels eines linierten, normalen Pfeils gekennzeichnet sind.

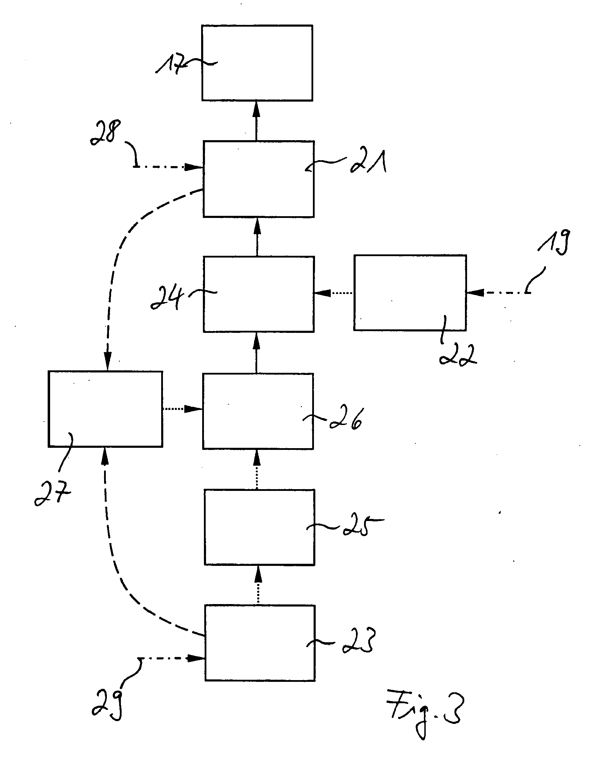

Fig. 3 zeigt beispielhaft ein weiteres Zustandsdiagramm mit einem weiteren Ablauf zum Aktivieren und Deaktivieren der Datenbusse 3, 4, 5. Zusätzlich zu dem Zustandsdiagramm nach Fig. 2 sind hier Zustandswechsel vom Zustand 4 zum Zustand 5, der in der Fig. 3 mit einem Bezugszeichen 27 bezeichnet ist, und vom Zustand 1 zum Zustand 5 vorhanden. Diese beiden Zustandswechsel sind mit einem gestrichelten Pfeil gekennzeichnet. Ausgehend vom Zustand 5 erfolgt dann das Einstellen des Zustands 7. Ausgehend vom Zustand 7 erfolgen die weiteren Zustandswechsel, wie bereits im Zusammenhang mit Fig. 2 beschrieben. Beim vorliegenden Ausführungsbeispiel gemäß Fig. 3 muss aufgrund von externen Ereignissen 28 und 29, die die Zustände 4 und 1 anstoßen, zunächst ein zusätzlicher der Datenbusse 3, 4, 5 aktiviert werden. Beim Zustandswechsel vom Zustand 4 zum Zustand 5 ist dies der Datenbus 3 und beim Zustandswechsel vom Zustand 1 zum Zustand 5 der Datenbus 5.

Gemäß der vorliegenden Erfindung ist es somit möglich, die in dem Speicher 14 abgespeicherten Bedingungen zu verändern, d. h. für die beschriebenen Ausführungsbeispiele die in der Spalte 5 vorgegebenen Folgezustände.

## Patentansprüche

1. Verfahren zum Steuern von Netzwerksegmenten (3, 4, 5) eines Netzwerks (2) in einem Kraftfahrzeug (1), wobei die Netzwerksegmente (3, 4, 5) in Abhängigkeit von vorgegebenen Bedingungen aktiviert oder deaktiviert werden und die Bedingungen verändert werden.

2. Verfahren nach Anspruch 1, **dadurch gekennzeichnet, dass** die vorgegebenen Bedingungen in Abhängigkeit von Parametern verändert werden.

3. Verfahren nach Anspruch 1 oder 2, **dadurch gekennzeichnet, dass** die vorgegebenen Bedingungen in einer Liste enthalten sind und der Inhalt dieser Liste verändert wird.

4. Verfahren nach einem der vorhergehenden Ansprüche, **dadurch gekennzeichnet, dass** die vorgegebenen Bedingungen mittels einer insbesondere externen Steuereinrichtung (16) verändert werden.

5. Vorrichtung (6) zum Steuern von Netzwerksegmenten (3, 4, 5) eines Netzwerks (2) in einem Kraftfahrzeug (1) mit einem Speicher (14) zum Abspeichern von vorgegebenen Bedingungen zum Aktivieren und Deaktivieren der Netzwerksegmente (3, 4, 5), wobei die Vorrichtung (6) so ausgestaltet ist, dass sie das Aktivieren oder Deaktivieren der Netzwerksegmente (3, 4, 5) in Abhängigkeit von den vorgegebenen Bedingungen steuert und die Bedingungen veränderbar sind.

6. Vorrichtung nach Anspruch 5, **dadurch gekennzeichnet, dass** zum Empfangen von veränderten Bedingungen eine Schnittstelle (15) zu einer insbesondere externen Steuereinrichtung vorhanden ist.

7. Vorrichtung nach Anspruch 5 oder 6, **dadurch gekennzeichnet, dass** das Netzwerk (2) ein Datenbussystem und die Netzwerksegmente (3, 4, 5) Datenbusse sind.
